# FASCICULE DE BREVET EUROPEEN

(11) **EP 1 674 707 B1**
(45) Date de publication et mention de la délivrance du brevet: **12.12.2007**
(21) Numéro de dépôt: 05292150.9
(22) Date de dépôt: 13.10.2005
(51) Int. Cl.: F02K 1/12

(54) **Tuyère a section variable de turbomachine à support de levier de commande monobloc**
Düse mit veränderlichem Querschnitt mit einstückiger Steuerhebelhalterung für eine Turbomaschine
Variable area nozzle with one-piece control lever support for a turbomachine

(30) Priorité: 26.10.2004 FR 0411394
(43) Date de publication de la demande: 28.06.2006
(73) Titulaire: SNECMA, 75015 Paris (FR)
(72) Inventeur: Dakowski, Mathieu, 94370 Sucy en Brie (FR); Duval, Sylvain, 77220 Tournan en Brie (FR); Kreder, Olivier, 77930 Chailly en Biere (FR); Lunel, Romain, 77550 Moissy Cramayel (FR); Mandet, Emmanuel, 77830 Echouboulains (FR); Sevi, Guillaume, 94200 Ivry-sur-Seine (FR)
(74) Mandataire: Boura, Olivier

(56) Documents cités:
- EP-A- 1 503 068
- EP-A1- 1 333 172
- FR-A1- 2 750 167
- GB-A- 1 119 915
- US-A- 3 837 580

## Description

### Arrière-plan de l'invention

La présente invention se rapporte au domaine général des tuyères à section variable pour turbomachines, et concerne plus particulièrement les tuyères constituées par une pluralité de volets mobiles formant une couronne.

Une architecture conventionnelle de tuyère à section variable de turbomachine, comme décrite par exemple dans EP-A-1 503 068, est illustrée partiellement à la figure 4. Dans ce type d'architecture, la tuyère 100 comporte notamment une pluralité de volets mobiles 102, 102' montés sur une extrémité aval d'un carter annulaire 104 de la turbomachine. Les volets mobiles forment ainsi une couronne.

Les volets mobiles 102, 102' sont actionnés par un système de commande de façon à modifier le profil du flux de la veine primaire (i.e. la section d'éjection) de la turbomachine. Le système de commande se compose de leviers de commande 106, 106' chacun associés à un volet mobile 102, 102' respectif et au moins un vérin d'actionnement 108 des leviers de commande. Des liaisons de type chapes rotulantes 110 relient les leviers de commande 106, 106' entre eux afin de synchroniser le déplacement des volets mobiles 102, 102'.

La tuyère 100 comporte également une pluralité de paires de bras (ou attelles) formant chacune support 112, 112' d'un levier de commande 106, 106'. Les deux bras 112a, 112b et 112'a, 112'b de chaque support 112, 112' sont fixés au carter 104 et, à leur extrémité aval, à l'un des leviers de commande par l'intermédiaire d'une bobine 114, 114'.

La bobine 114, 114' de chaque support 112, 112' de levier de commande est montée entre les deux bras d'un même support, au niveau de leur extrémité aval. Une telle bobine s'articule autour d'un axe vissé entre les deux bras afin de régler la section variable de la tuyère.

Lors du montage d'une telle architecture de tuyère à section variable, les différentes pièces constitutives de la tuyère doivent être assemblées selon un ordre spécifique afin d'assurer une parfaite continuité (et étanchéité) de la veine primaire pendant le fonctionnement de la tuyère et cela quelle que soit sa section d'ouverture.

En effet, selon la précision et l'ordre d'assemblage des pièces constitutives de la tuyère, des déformations plus ou moins prononcées apparaissent en fonctionnement, provoquant d'importants décalages dans le braquage des différents volets mobiles, c'est-à-dire dans l'angle que fait chacun de ces volets par rapport à l'axe de la turbomachine.

Cette précision d'assemblage est notamment importante pour les bras (ou attelles) formant les supports des leviers de commande. Comme le montre la figure 5, lors du montage de ces pièces, un désalignement axial 116 peut apparaître entre deux supports de levier de commande 112, 112' adjacents. Un désalignement axial 118 entre deux bras 112'a, 112'b d'un même support de levier de commande 112' peut également résulter d'une imprécision lors de l'assemblage de la tuyère (le support forme alors un parallélogramme non rectangle). En fonctionnement, de tels désalignements 116, 118 peuvent engendrer des fuites au niveau de la bobine 114, 114' du levier de commande.

### Objet et résumé de l'invention

La présente invention vise précisément à remédier à de tels inconvénients en proposant une tuyère à section variable dont l'assemblage simplifié permet d'assurer une parfaite continuité de la veine primaire pendant le fonctionnement.

Ces buts sont atteints, conformément à l'invention, grâce à une tuyère à section variable de turbomachine, comportant une pluralité de volets mobiles montés sur une extrémité aval d'un carter annulaire de la turbomachine, un système de commande des volets mobiles comportant des leviers de commande chacun associés à un volet mobile et au moins un vérin d'actionnement des leviers de commande, et une pluralité de paires de bras formant chacune support d'un levier de commande, les bras de chaque support étant fixés au carter et à une extrémité aval à un levier de commande, caractérisée en ce que chaque paire de bras formant support de levier de commande est formée d'une seule et même pièce.

De la sorte, on évite tout risque d'imprécision au montage de la tuyère. En outre, l'assemblage des volets mobiles de la tuyère sur le carter se trouve simplifié. L'utilisation d'une seule et même pièce (pièce monobloc) pour les supports de leviers de commande réduit en effet l'empilage de tolérances lors du montage, ce qui contribue à éviter tout risque de fuites entre les différents volets mobiles de la tuyère. Il résulte également d'une structure monobloc des supports de levier de commande une réduction des coûts au montage et à la fabrication de ces supports.

Selon une caractéristique particulière, chaque support de levier de commande comporte en outre une entretoise amont fixée entre les extrémités amont de chaque bras.

Dans ce cas, l'entretoise amont de chaque support de levier de commande forme de préférence une seule et même pièce avec les bras du support.

Le ou les vérins d'actionnement peuvent être montés sur le carter par l'intermédiaire de l'un des supports de levier de commande.

La présente invention a également pour objet un support pour levier de commande d'un volet mobile d'une tuyère à section variable de turbomachine tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle en perspective d'une tuyère à section variable selon l'invention ;
- les figures 2 et 3 sont des vues en perspective de supports de levier de commande de la tuyère de la figure 1 ;

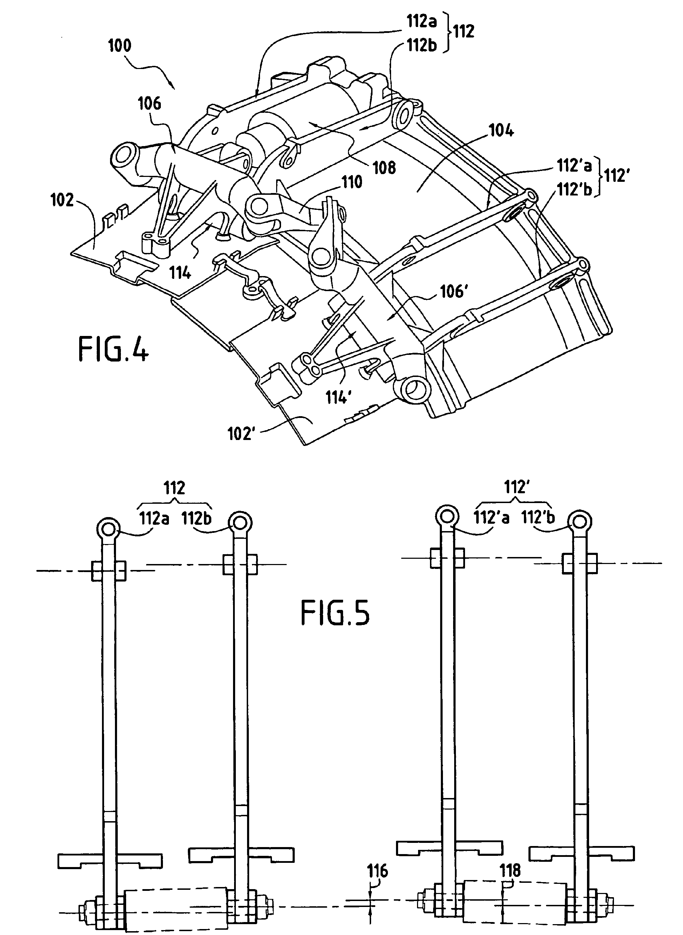

- la figure 4 précédemment décrite est une vue partielle en perspective d'une tuyère à section variable selon l'art antérieur ; et
- la figure 5 précédemment décrite est une vue de dessus de supports de levier de commande de la tuyère de la figure 4.

### Description détaillée d'un mode de réalisation

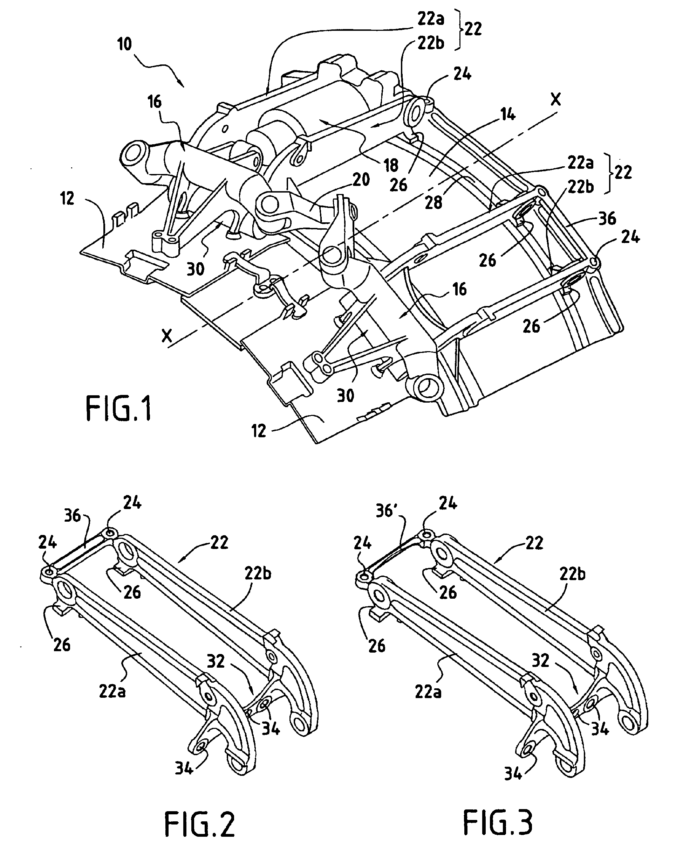

La figure 1 représente partiellement une tuyère 10 à section variable de turbomachine selon l'invention.

La tuyère 10 d'axe X-X comporte notamment une pluralité de volets mobiles commandés 12 et de volets mobiles suiveurs 13 qui sont montés sur une extrémité aval d'un carter annulaire 14 de la turbomachine centré sur l'axe X-X. Les volets commandés 12 et suiveurs 13 forment ainsi une couronne.

Les volets mobiles commandés 12 sont actionnés directement par des moyens de commande de manière à modifier le profil du flux primaire (i.e. la section d'éjection) de la turbomachine.

Les moyens de commande des volets commandés 12 comportent des leviers de commande 16 chacun associés à un volet mobile 12 respectif et au moins un vérin d'actionnement 18 des leviers de commande. Chaque levier est fixé au volet mobile 12 qu'il commande.

Sur l'exemple de la figure 1, on remarque qu'un seul vérin 18 permet d'actionner à la fois deux leviers de commande 16. D'autres configurations sont également envisageables (un vérin d'actionnement par levier de commande par exemple).

Des liaisons de type chapes rotulantes 20 relient les leviers de commande 16 entre eux afin de synchroniser le déplacement des volets mobiles 12. Notamment, lorsqu'un seul vérin 18 actionne à la fois deux leviers de commande 16, les liaisons 20 permettent de transmettre la cinématique de mouvement du levier actionné au levier suiveur.

Les volets mobiles suiveurs 13 sont disposés radialement à l'intérieur des volets commandés 12 et prennent appui sur les volets commandés adjacents. Ils permettent ainsi d'assurer la continuité et l'étanchéité de la veine primaire pendant le fonctionnement de la tuyère et cela quelque soit sa section d'ouverture.

La tuyère 10 comporte également une pluralité de paires de bras 22 (ou attelles) formant chacune support d'un levier de commande 16. Chaque support 22 d'un levier de commande se compose essentiellement de deux bras 22a, 22b sensiblement parallèles qui s'étendent selon l'axe X-X de la tuyère.

Les deux bras 22a, 22b de chaque support 22 sont fixés à leur extrémité amont au carter 14 de la tuyère 10 par l'intermédiaire de vis (non représentées) venant se loger radialement dans des orifices 24.

Par ailleurs, des pattes 26 sont également formées au niveau de l'extrémité amont de chaque bras 22a, 22b d'un même support 22. De telles pattes viennent se loger dans une rainure 28 circonférentielle du carter 14 afin d'assurer un blocage axial du support 22 sur le carter.

A leur extrémité aval, les bras 22a, 22b de chaque support 22 forment chacun une crosse et sont reliés à l'un des leviers de commande 16 par l'intermédiaire d'une bobine 30. Cette bobine 30 est fixée entre les extrémités aval des deux bras 22a, 22b des supports 22 par des systèmes de type vis/écrou (non représentés).

Selon l'invention, chaque paire de bras 22 formant support de levier de commande est formée d'une seule et même pièce. Comme représenté sur les figures 2 et 3, les supports 22 de levier de commande sont en effet monobloc. Ils peuvent par exemple être obtenues par de fonderie ou en soudant les deux bras ou encore par usinage dans la masse.

Les bras 22a, 22b d'un même support 22 sont reliés transversalement entre eux au niveau de leur extrémité aval par une entretoise aval 32 formant une seule et même pièce avec les bras du support (figures 2 et 3).

Plus précisément, l'entretoise aval est formée par une languette 32 s'étendant radialement vers l'intérieur du carter et comportant une pluralité de trous 34. Cette languette est ainsi destinée à venir se loger dans une rainure circonférentielle (non représentée sur la figure 1) pratiquée dans le carter, les trous 34 permettant le passage de systèmes d'attaches pour la fixation du support 22 sur le carter.

La figure 2 représente un exemple de réalisation selon l'invention d'un support 22 de levier de commande destiné à coopérer avec un levier de commande qui n'est pas actionné directement par un vérin.

Comme illustré sur cette figure 2, un tel support 22 de levier de commande peut comporter avantageusement une entretoise amont 36 fixée entre les extrémités amont de chaque bras 22a, 22b le composant. Une telle entretoise amont 36 permet de rigidifier le support 22 de levier de commande. Sur l'exemple de cette figure, l'entretoise amont 36 s'étend transversalement entre les orifices 24 de fixation des bras 22a, 22b sur le carter.

La figure 3 illustre un autre exemple de réalisation d'un support 22 de levier de commande. Ce support est plus spécifiquement destiné à coopérer avec un levier de commande qui est directement actionné par un vérin.

Sur cet exemple de réalisation, le support 22 comporte également une entretoise amont 36' pour rigidifier l'ensemble. Cette entretoise amont 36' est cependant de section plus faible que celle de l'exemple de réalisation de la figure 2.

En effet, étant donné que ce support 22 est destiné à coopérer avec un levier de commande directement actionné par un vérin, il est moins rigide que le support sans vérin de la figure 2 de façon à pouvoir venir serrer par un axe le vérin.

Quelque soit la forme de l'entretoise amont reliant transversalement les extrémités amont des bras de chaque support de levier de commande, celle-ci est bien entendu de préférence réalisée en une seule et même pièce avec les bras et l'entretoise aval du support.

En liaison avec la figure 1, on notera que les vérins d'actionnement 18 des leviers de commande 16 sont montés sur le carter 14 entre les deux bras 22a, 22b d'un même support 22 de levier de commande.

## Revendications

1. Tuyère à section variable (10) de turbomachine, comportant une pluralité de volets mobiles (12, 13) montés sur une extrémité aval d'un carter annulaire (14) de la turbomachine, un système de commande des volets mobiles comportant des leviers de commande (16) chacun associés à un volet mobile (12) et au moins un vérin d'actionnement (18) des leviers de commande (16), et une pluralité de paires de bras formant chacune support (22) d'un levier de commande, les bras (22a, 22b) de chaque support (22) étant fixés à la fois au carter (14) et à un levier de commande (16), **caractérisée en ce que** chaque paire de bras formant support (22) de levier de commande est formée d'une seule et même pièce.

2. Tuyère selon la revendication 1, **caractérisée en ce que** chaque support (22) de levier de commande comporte en outre une entretoise amont (36, 36') fixée entre les extrémités amont de chaque bras (22a, 22b) du support.

3. Tuyère selon la revendication 2, **caractérisée en ce que** l'entretoise amont (36, 36') de chaque support (22) de levier de commande forme une seule et même pièce avec les bras (22a, 22b) dudit support.

4. Tuyère selon l'une quelconque des revendications 1 à 3, **caractérisée en ce que** ledit au moins un vérin d'actionnement (18) est monté sur le carter (14) par l'intermédiaire de l'un des supports (22) de levier de commande.

5. Support (22) pour levier de commande (16) d'un volet mobile (12) d'une tuyère à section variable (10) de turbomachine selon l'une quelconque des revendications 1 à 4, le support comportant une paire de bras pouvant être fixés à la fois au carter (14) et à un levier de commande (16), **caractérisé en ce que** la paire de bras formant le support (22) est formée d'une seule et même pièce.

## Claims

1. A variable-section nozzle (10) for a turbomachine, the nozzle comprising a plurality of moving flaps (12, 13) mounted on the downstream end of an annular casing (14) of the turbomachine, a moving flap control system comprising control levers (16) each associated with a respective moving flap (12) and at least one actuator (18) for actuating the control levers (16), and a plurality of pairs of arms each forming a control lever support (22), the arms (22a, 22b) of each support (22) being secured both to the casing (14) and to a control lever (16), the nozzle being **characterised in that** each pair of arms forming a control lever support (22) is formed as a single piece.

2. A nozzle according to claim 1, **characterised in that** each control lever support (22) further comprises an upstream spacer (36, 36') secured between the upstream ends of each arm (22a, 22b) of the support.

3. A nozzle according to claim 2, **characterised in that** the upstream spacer (36, 36') of each control lever support (22) is formed integrally with the arms (22a, 22b) of said support.

4. A nozzle according to any one of claims 1 to 3, **characterised in that** said at least one actuator (18) is mounted on the casing (14) via one of the control lever supports (22).

5. A support (22) for a control lever (16) of a moving flap (12) of a turbomachine variable-section nozzle (10) according to any one of claims 1 to 4, the support comprising a pair of arms capable of being secured both to the casing (14) and to a control lever (16), the support being **characterised in that** the pair of arms forming the support (22) is formed as a single piece.

## Patentansprüche

1. Düse mit variablem Querschnitt (10) einer Turbomaschine, umfassend eine Vielzahl von beweglichen Klappen (12, 13), die an einem stromabwärtigen Ende eines ringförmigen Gehäuses (14) der Turbomaschine angebracht sind, ein System zum Steuern der beweglichen Klappen, das Steuerhebel (16), die jeweils einer beweglichen Klappe (12) zugeordnet sind, sowie wenigstens einen Zylinder (18) zum Betätigen der Steuerhebel (16) umfaßt, sowie eine Vielzahl von Armpaaren, die jeweils einen Träger (22) eines Steuerhebels bilden, wobei die Arme (22a, 22b) jedes Trägers (22) sowohl an dem Gehäuse (14) als auch an einem Steuerhebel (16) befestigt sind, **dadurch gekennzeichnet, daß** jedes einen Träger (22) eines Steuerhebels bildende Armpaar aus ein und demselben Teil gebildet ist.

2. Düse nach Anspruch 1, **dadurch gekennzeichnet, daß** jeder Träger (22) eines Steuerhebels ferner eine stromaufwärtige Querstrebe (36, 36') aufweist, die zwischen den stromaufwärtigen Enden jedes Arms (22a, 22b) des Trägers befestigt ist.

3. Düse nach Anspruch 2, **dadurch gekennzeichnet, daß** die stromaufwärtige Querstrebe (36, 36') jedes Trägers (22) eines Steuerhebels mit den Armen (22a, 22b) des Trägers einstückig ausgebildet ist.

4. Düse nach irgendeinem der Ansprüche 1 bis 3, **dadurch gekennzeichnet, daß** der wenigstens eine Betätigungszylinder (18) an dem Gehäuse (14) mittels einem der Träger (22) eines Steuerhebels angebracht ist.

5. Träger (22) für einen Steuerhebel (16) einer beweglichen Klappe (12) einer Düse mit variablem Querschnitt (10) einer Turbomaschine nach irgendeinem der Ansprüche 1 bis 4, wobei der Träger ein Paar von Armen umfaßt, die sowohl an dem Gehäuse (14) als auch an einem Steuerhebel (16) befestigt werden können, **dadurch gekennzeichnet, daß** das den Träger (22) bildende Armpaar aus ein und demselben Teil gebildet ist.
